# EUROPEAN PATENT SPECIFICATION

(11) **EP 1 302 764 B1**
(45) Date of publication and mention of the grant of the patent: **21.02.2007**
(21) Application number: 01308638.4
(22) Date of filing: 10.10.2001
(51) Int. Cl.: G01N 15/14

(54) **Particle data analysis**
Teilchendatenanalyse
Analyse de données de particules

(43) Date of publication of application: 16.04.2003
(73) Proprietor: Borealis Technology Oy, 06101 Porvoo (FI)
(72) Inventor: Mathisen, Rune, 3722 Skien (NO); Hassel, Per Anker, 3722 Skien (NO); Garner, Richard, 2223 Schriek Belgia (BE)
(74) Representative: Jackson, Robert Patrick

(56) References cited:
- EP-A- 0 653 492
- WO-A-98/57152
- WO-A-99/58955
- DE-A- 19 736 172
- US-A- 4 011 459
- US-A- 4 220 499
- US-A- 5 430 105
- US-A- 5 561 515
- US-A- 5 815 265

## Description

The invention relates to a method of analysing data in order to determine the properties of a flowing material. The method is particularly suitable for applications in the field of polymer production where the product is often produced in the form of powder or pellets that are transported around the production plant by gravity or using pneumatic transport, i.e. by entraining them in a gas. The invention also provides an apparatus for carrying out the said method.

Certain types of instrument are particularly useful for taking measurements continuously and are therefore good candidates for monitoring conditions in a chemical process plant. Such instruments may for example be used to measure parameters such as temperature, pressure, density, flow rate and other conditions that are indicative of the chemical and physical properties of the process materials.

WO9857152 discloses a method and apparatus for counting micro particles such as latex beads containing a fluorescent substance labelled with dyes which determine whether the bead fluorescence falls into one of the predefined bead subset regions and if it does not match, for example because the bead is incorrectly positioned, or it is due to spurious noise, then it is not included in the statistics.

WO9958955 discloses a cytometer arrangement for detecting fluorescence data from polystyrene beads in a flow analyser in which background particle signals are rejected through the use of electronic filtering before the fluorescent spectra emitted by the tagged micro particles are compared to the recorded fluorescent spectrum of the dye to distinguish tagged particles from other fluorescently tagged micro particles.

Spectrometers are a class of instrument that may be used to make continuous measurements. The general manner in which the properties of a polymer may be determined using spectroscopy is described for example in In-Line Monitoring of Polyethylene Density Using Near Infrared (NIR) Spectroscopy, Masataka Tanigaki, Polymer Engineering and Science, May 2000, Vol 40, No.5. This document, however, concerns measurements carried out in relation to an extruder where there is a flow of molten polymer, rather than powder or pellets.

In contrast, US 5,459,318 teaches a method of monitoring the moisture of particulate materials flowing in a fluidised bed using NIR (near infra-red) spectroscopy. A qualitative analysis of different plastics using fluorescence detection by UV radiation is disclosed in US 5,256,880.

However, it has been found that a particular problem is associated with the monitoring of properties of flowing particulate material. This results from the fact that the amount of material flowing past a certain point may vary considerably with time. The problem occurs particularly when solid particles are entrained in a fluid, where large amounts of particulate material may be flowing in one section of fluid and there may be very little or no material at all in the next section of fluid. This presents difficulties in analysing the data obtained from an instrument such as a spectrometer that is continuously taking data readings from the material flowing past it.

For example, in polymer production plants the polymer particles may be entrained in a gas and transported pneumatically around the plant using equipment such as rotary feeders, which cause pulsating effects. This results in irregular flow patterns, including intermittent flow of the solid polymer material. Similar effects may occur when the material is transported by gravity. The data obtained in this way is therefore prone to containing a significant amount of noise.

The traditional approach to reducing noise is to take many measurements of the sample concerned and then to use the measurement average. This is a statistically proven method for improving the signal to noise ratio if the data is symmetrically distributed about a "true" value. However, where a spectrophotometer is used to take a continuous reading from a point in the process plant, there are times at which no polymer is flowing past the spectrophotometer and so the data obtained consists of noise and disturbances that are not representative of the properties of the polymer under test. The inventors have recognised that this can result in distortion of the output data, thereby giving an inaccurate indication of the measured property.

Viewed from one aspect, the invention provides a method of analysing data related to the properties of a flowing particulate polymer comprising:
(i) obtaining a plurality of data samples;
(ii) testing each data to determine whether to accept or reject said data sample;
(iii) analysing accepted data samples obtained in step (ii) to obtain a data output related to the properties of said polymer itself.

Testing step (ii) serves to identify data samples which are obtained at a time when there is too little or too much polymer flowing past the data sampling point to provide useful data. Although the invention would provide an improvement over the prior art if some or all rejected samples were used in addition to the accepted samples, with an appropriate weighting being given to the two sets of samples to mitigate the effect of the rejected samples, it is preferred that only accepted samples be used in step (iii).

The testing step (ii) may be carried out on the basis of comparison with reference data which may be pre-determined or dynamically, e.g. based on an analysis of previous samples. Of course, it is also possible that a combination of these approaches be used, such that initially pre-determined reference data may be modified in the light of the obtained data samples.

By carrying out the data analysis based only on the accepted data samples, it is possible to remove, or at least mitigate, the effect of any data samples which are obtained at a time when there is little or no polymer flowing past the data sampling point. Hence the method of the invention is advantageous because the properties of the material can be monitored on a continuous basis whilst allowing a meaningful data output to be obtained.

In step (i), the data samples may be obtained from any suitable online measurement instrument. The invention is, however, particularly applicable to spectrometers in general. For example, the instrument may be a spectrophotometer, e.g. IR, UV-VIS (ultra-violet plus visual), Raman, etc. It may also be a form of acoustic spectrometer; either active or passive acoustic spectrometers are suitable.

Thus viewed from another aspect, the invention provides an apparatus for providing information about the properties of flowing particulate polymer, the apparatus comprising an online measurement instrument, means for testing each data sample obtained in order to determine whether to accept or reject said data sample and means for analysing said accepted sample(s) to obtain a data output related to the properties of said polymer itself.

As already explained, the purpose of the testing step (ii) of the method is to determine whether the data sample is of useful quality and make a decision whether to reject or to accept that sample before subjecting the data sample to analysis. This may be done by defining a threshold level at which the measured data sample is so different from an ideal or reference sample that it is rejected because it is highly probable to be a very noisy signal, or does not contain information related to the quality parameter(s) in question, e.g. because there is no or too little polymer present at the measuring point at the moment the spectrum is scanned. In general, the threshold could be set at a level beyond which the sample is judged to have a significant influence on the average or mean values of a number of samples over time. Thus, the threshold will be worked out by deciding whether it has a significant impact on the mean or average sample value when compared against the ideal or reference data sample.

Thus, the testing step is a form of quality control in which the quality of each data sample is assessed and substandard data samples are rejected. In this way, data samples which are representative of "noisy" spectra or spectra not containing relevant information that are unlikely to be indicative of the properties of the material under test are rejected.

The reference sample is effectively an "ideal" sample or set of samples that can be determined by any appropriate means based on various criteria. For example, it may be obtained experimentally by producing a flow of a large amount of particles in a continuous stream such that a low noise signal is produced. Criteria which may be used to compare each data sample against a reference data sample include (but are not limited to) the minimum/maximum energy reading of a spectrum, the minimum/maximum peak ratio or peak difference for a given chemical group in the material under test (e.g. C-H, N-H, S-H), a score check of the individual spectrum using PCA (principle component analysis) based on previously acquired or dynamically generated data, or a check to see whether the spectrum fits within the range of standard deviations of individual wavelengths of the reference spectrum. The criterion may be a simple maximum energy reading from the spectrum, e.g. corresponding to the maximum peak. A combination of one or more of these criteria may also be used.

Once suitable criteria have been determined and a threshold value set, this may be used during testing step (ii). If necessary or desired, a range can then be set within which the data samples should be accepted, and any data samples falling outside this range will be rejected.

A representative range within which acceptable readings are judged to fall may for example be anything within about ±1 to ±5% of the threshold value based on the reference sample, although in some circumstances a larger threshold value, say ±10 or even 20% may be appropriate. The particular range that is suitable for a given process will depend on several factors, such as the sensitivity of the instrument being used. The range of acceptable data may typically not be symmetrically disposed around the threshold. Thus, in some circumstances the range of acceptable values could be much wider and may extend below 1% and above 5% of the reference sample value. In some cases any sample above the threshold value may be accepted.

Although the threshold value may remain constant, preferably the threshold value is repeatedly or continuously updated, thus correcting for instrument or system drift.

Other suitable criteria for determining the appropriate reference sample value and corresponding appropriate ranges for determining which samples should be accepted would be readily apparent to one skilled in the art.

Accurate reference spectra can be acquired off-line with identical instrumentation to that used on-line. The off-line spectra may be considered as a guideline or a reference of what spectra should generally be like. (The action of transportation of material should not change its chemistry.) These off-line spectra may then be used to determine the criteria referred to above.

Although it is theoretically possible to implement the invention using a manual comparison step (e.g. by visually comparing a graphical representation of sample data with corresponding data from the reference sample), this could only be achieved in real time if only a small number of spectra were obtained periodically. It is therefore particularly preferred for the invention to be carried out by an automated system e.g. by means of software which may be integrated into the data acquisition system.

In step (ii) of the method, where the testing step is automated, it is typically carried out by means of a software-based algorithm. The particular algorithm used determines the way in which the data samples are obtained and compared against the reference sample. Hence, the data acquisition system conveniently comprises a computer connected to an online measuring instrument such as a spectrometer.

In order for the algorithm to function properly, it may be necessary or desirable to store the data for a time. The data samples may therefore be temporarily stored e.g. transiently stored in a computer memory until they are used in subsequent calculations, or they may be stored in the longer term for use in later evaluations and data analysis.

In certain embodiments of the invention, the algorithm is designed such that a plurality of data samples obtained in step (i) is stored before carrying out testing step (ii).

In other embodiments of the invention, the algorithm is such that steps (i) and (ii) may be carried out individually for each sample. Thus, each data sample is obtained and then compared individually against the reference sample before storing, so that only the accepted data samples are stored and the rejected data samples are discarded without storing them. Data analysis according to step (iii) is then carried out on the stored, accepted data samples.

In a further embodiment of the invention the algorithm is such that each data sample comprises a mean or average value of a subset of data samples.

Thus, in step (i) of the method, a subset of data samples is obtained and an average value calculated for this subset. The average value may for example be the mean value for the subset. More data samples are obtained to create further subsets and the averages of the subsets are calculated until a plurality of average values is obtained. Step (ii) of the method is then carried out such that each average value is compared against a reference value in order to determine whether to accept or reject that average value.

Where the data sample is an average value of a subset of data samples, each individual data sample of a subset may be stored and then the average value of that subset calculated. The average value itself may then be stored. The process is then repeated until a sufficient number of average values is obtained, at which point the average values are compared against the reference value according to step (ii).

Whichever approach is used, it will in general be necessary to set a limit on the total number of data samples which are to be obtained before testing step (ii) is carried out. This limit will depend on the operating conditions (e.g. rate of flow of material) and on the type of instrument used to obtain the data samples (e.g. the speed of scanning for a spectrometer) but in general may vary from about ten to several thousands, preferably 100 to 1000.

Where the data samples are themselves average values of a subset of data samples, a predetermined number of data samples in each subset will generally be set. For example, each subset could consist of 20 to 50 data samples.

The invention is particularly suitable for determining the properties of a flowing particulate material entrained in a gas (pneumatic transport). The properties in question will depend on the type of material under test. The material may for example be in the form of particles such as powder or pellets. In one preferred embodiment of the invention the material is a polymer such as polyethylene, e.g. high-density polyethylene (HDPE), polypropylene or other polyolefins The carrier gas is usually air or nitrogen.

For example, for polypropylene, some useful properties that can be measured include the ethylene content, the xylene solubles, flexural modulus, Izod and high level additive content. For high-density polyethylene (HDPE) using NIR, the density via comonomer content or monomer/co-monomer ratio and additive content (if above detection limit). Other online analytical techniques may provide measurements like MFR, additive content, etc. However, these lists are not exhaustive and a person skilled in the art will readily be able to ascertain the suitable properties of a particular material that can be monitored according to the invention.

The properties of the material may be determined by calculating a mean value of the accepted data samples and using the mean value to determine the properties of the material. If the throughput of material is not constant then it is preferable to use a statistically weighted mean value.

The method of invention is particularly suitable for analysing spectroscopic data. Accordingly in a most preferred embodiment, the instrument used to obtain the data samples is a spectrophotometer, and the data samples obtained and analysed comprise spectroscopic data.

Spectroscopy is especially useful as a means of monitoring the properties of various chemical materials as it can give a "fingerprint" of the material under test that can even be used to distinguish it from other similar materials. It is therefore a sensitive tool for monitoring the properties of a polymer that may change during production due to changes in the reaction conditions.

In general, spectroscopic equipment is readily available. Fast scanning spectroscopic equipment is capable of scanning very quickly, i.e. capable of producing spectral data samples of the order of 10 to 15 spectra per second. Hence it is highly suitable for analysing a flowing material.

Near infra-red (NIR) spectroscopy is preferred although light from other parts of the spectrum such as infra-red, ultra violet and visible may also be used. A variety of spectrometers are commercially available from manufacturers such as Brimrose. In general, instruments with a high scanning speed are preferred and for this reason an acousto-optical tunable filter (AOTF) is preferred, such as for example the Brimrose (AOTF) - NIR spectrometer. However, other suitable spectrometers include scanning monochromator NIR instruments (e.g. Foss-NIR Systems 6500 or UOP Guided Wave), NIR filter instruments and FT-NIR instruments (ABB Bomem). Other suitable spectrometers are described in US 5,256,880.

It will be appreciated further that where a spectrophotometer is used according to the method of the present invention, it may be used in either absorbance or transmission mode. The data sample obtained may be based on the amount of radiation reflected from the material flowing past the spectrometer, or it may alternatively be based on the amount of radiation that passes through the material under investigation.

The method of the invention is particularly suitable to monitor the properties of a flowing material in real time.

The advantage of carrying out the method of the invention in real time is that it can be used to control the process in order to keep the production process and/or product properties within acceptable limits. Thus, if it is seen that the properties of the material under test are tending away from the optimum, adjustments to various factors which act on the process can be made rapidly and the product specification can be kept within acceptable limits.

Preferably therefore, the apparatus of the invention comprises a display means capable of displaying output relating to the properties of the material in real time so that action may be taken by a plant operator. However, it is particularly preferred for apparatus employing the method to provide output that is used automatically by plant control apparatus.

By real time it is meant that no significant delay takes place between the time that a data sample is obtained and the time when the output from the data analysis is obtained i.e. as opposed to showing the data for retrospective analysis. Thus ideally, an immediate result (data output) is obtained, but it will be appreciated that a small delay will not be detrimental and may also be considered to represent real time in the context of the invention. Depending on the circumstances, "real time" could allow for a delay of the order of micro-seconds, seconds or even a few minutes (e.g. not more than 2 to 5 minutes) if the circumstances allow. In practice such a delay may be regarded as acceptable if it enables the method of the invention to be a useful tool to the plant operator who is controlling the production process particularly bearing in mind the speed at which reaction conditions may be varied.

The process being controlled is preferably a continuous process and may be any process in which the products can be analysed by means of a continuous, on-line reading e.g. using a spectrophotometer. Polymer processes, especially processes to produce polyethylene, such as high-density polyethylene (HDPE), polypropylene and other polyolefins are particularly preferred.

It will be appreciated that in order to control a process efficiently, it is desirable to have a suitable means of processing the data and comparing it against reference data samples so that the decision whether to accept or reject the data can be taken quickly and a meaningful output obtained in real time which may then be used to control the process. Accordingly, in this embodiment of the invention the analysis will be carried out by an automated means, for example a computer with sufficient data handling and computing capacity.

The utility of the invention is not, however, limited to real time applications. Analysis of the properties of flowing material according to the invention is also useful to obtain a profile of the polymer properties over time. Such information can be used to gather information about the polymer properties of a particular batch produced by the process, so that a customer can be informed of the specific properties that relate to that particular batch of product. Thus, information about the homogeneity and/or consistency of the product can be gained using the method of the invention. The method according to the invention gives a better representation of the product properties than traditional methods that may involve sampling the product every 4 to 8 hours and analysing it in a laboratory.

Certain embodiments of the invention will now be described by way of example only and with reference to the following drawings in which:
Figure 1 is a schematic drawing of an apparatus for operation in accordance with one embodiment of the invention.
Figure 2 shows an output of raw spectral data from an NIR spectrometer scanning a flowing powder stream, and an "ideal" (reference) spectrum is marked as a bold black line.
Figure 3 shows a rejected, "bad" spectrum, a "reference" spectrum, shown as a bold black line, and an accepted, "good" spectrum.
Figure 4 shows a comparison between the sample mean spectrum, and the "ideal" (reference) spectrum. The difference between the "ideal" and "mean" spectra is shown in the small inlaid plot.
Figure 5 shows four different spectra, and illustrates the data output spectrum when the invention is put into effect compared against three other theoretical spectra.
Figure 6 shows two spectra where the difference in quality is illustrated by the nature of some peaks that are better resolved than others.
Figure 7 is a flow diagram showing a general algorithm according to the first embodiment of the invention.
Figure 8 is a flow diagram showing a general algorithm according to a second embodiment of the invention that is a modification of the first embodiment.
Figure 9 is a flow diagram showing a general algorithm according to a third embodiment of the invention that is also a modification of the first embodiment.
Figure 10 is a graph comparing a polypropylene spectrum obtained according to the invention with a spectrum obtained without using the method of the invention.

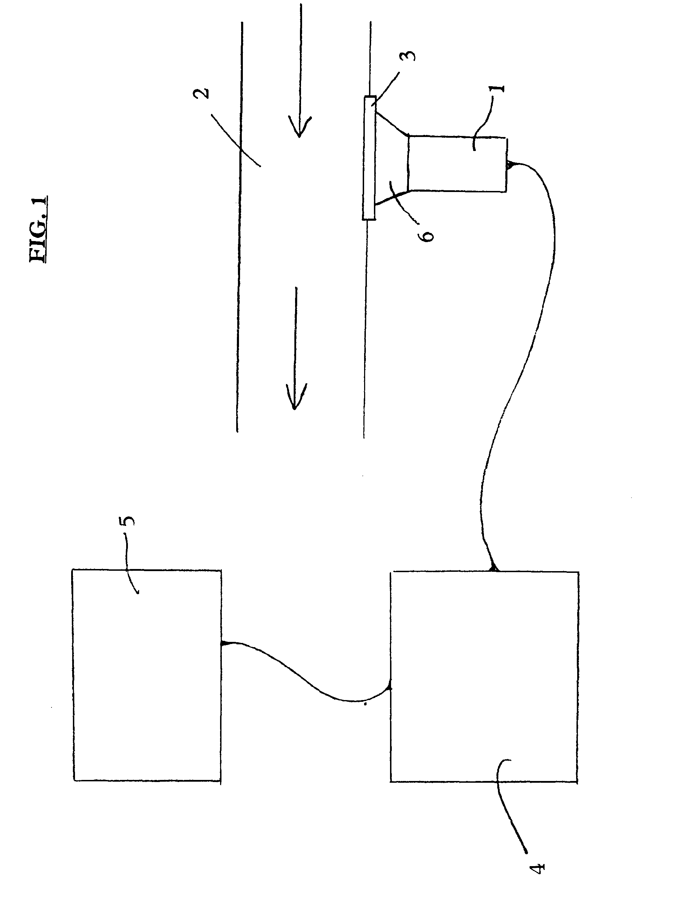

Figure 1 shows an overview of the apparatus used in one embodiment of the invention. A spectrometer 1 is positioned against a pipe 2 at a position where an optical window 3 is provided. The spectrometer 1 is connected to a processor 4. The processor 4 controls data acquisition and processes the data. Output from the processor 4 is fed to a multivariate prediction model 5 that uses the data to predict polymer density.
Pipe 2 contains flowing particulate polymer from a polymer production plant. The polymer in question is polyethylene and it is entrained in nitrogen gas and pumped from the process plant using rotary feeders.

The optical window 3 is specially adapted to allow infra-red radiation to penetrate it. It is made of sapphire and so it absorbs very little NIR energy. The same window can also be used when scanning in the UV and visible ranges. The optical window 3 is circular in shape, having a diameter of approximately 2 centimetres. Precautions are taken to minimise external disturbances such as light, water vapour and so forth by covering the space between the optical head of NIR spectrometer and the optical window with bellows 6.

The spectrometer 1 is a Brimrose AOTF spectrometer (designed for NIR reflection spectroscopy) and is positioned against window 3 in pipe 2. The spectrometer 1 is used in reflection mode. It is capable of sampling approximately 2000 single spectra in two minutes, but 900-1000 spectra are normally used in each analysis of this embodiment in order to ensure that the procedure is completed in an acceptable time.

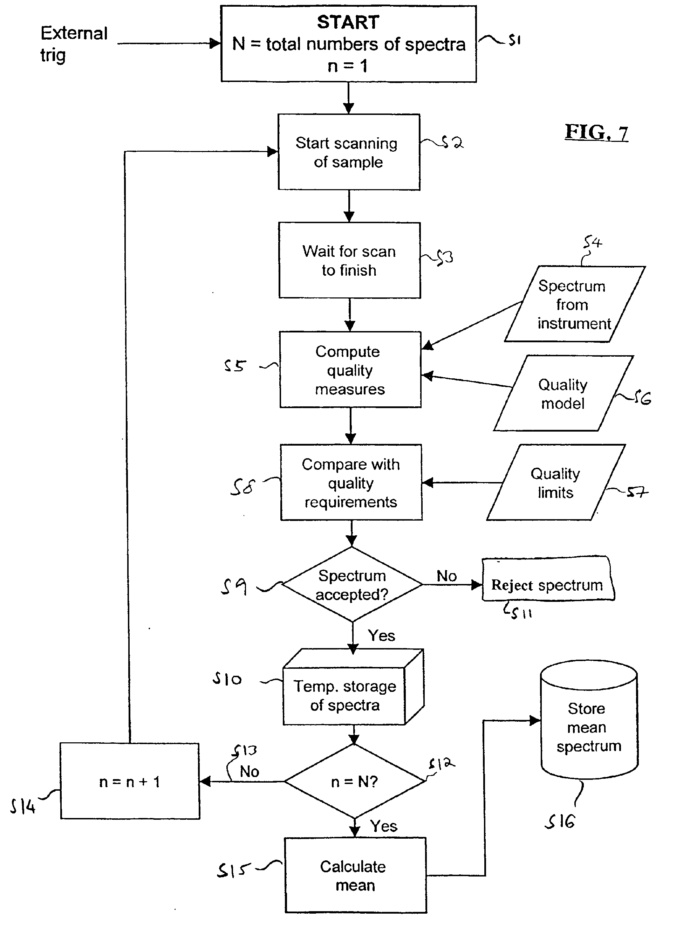

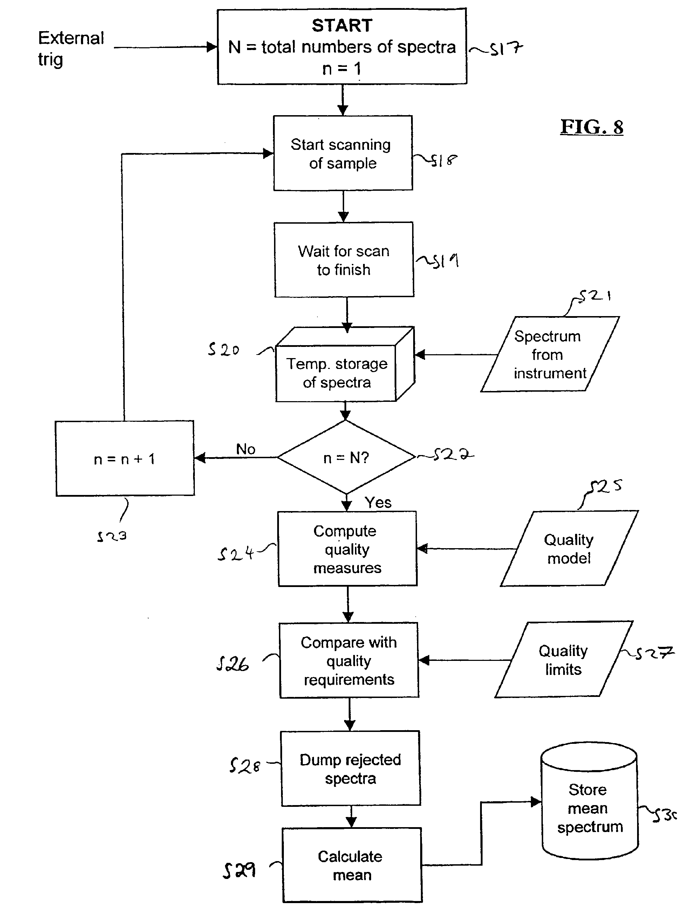

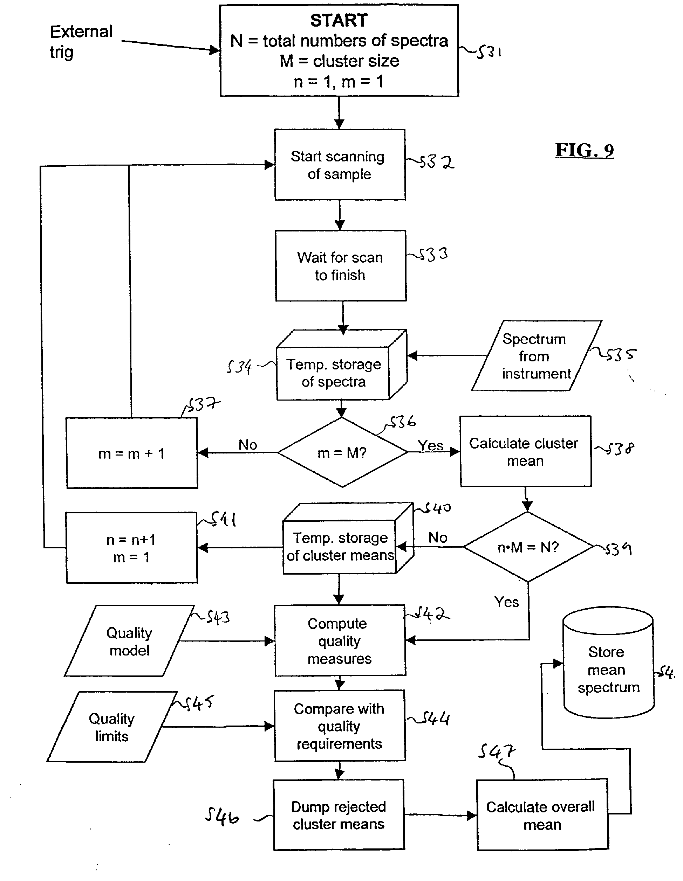

The raw spectral data is transmitted to the processor 4 where it is compared against a predetermined reference spectrum stored in the memory associated with the processor. The processor can be programmed to compare the data using a one of a number of alternative "quality models" and these will be described later. The accepted spectral data are then processed further by processor 4 to provide a corrected mean of all the accepted spectra. In the first embodiment of the invention the processor performs these steps as described in the flow chart of figure 7 which will be discussed further below. Further embodiments of the invention use the algorithms described in figures 8 and 9.

The output from processor 4 is transmitted to a multivariate prediction model 5 where polymer density is predicted in a manner well known in the art. This predicted data is then used in the control of the polymer production plant.

The approximate delay between completion of data sampling and appearance of the prediction result is only a few milliseconds but since about 900 spectra are sampled to achieve this, the overall process, from the start of data acquisition to prediction takes a total of about 45 seconds.

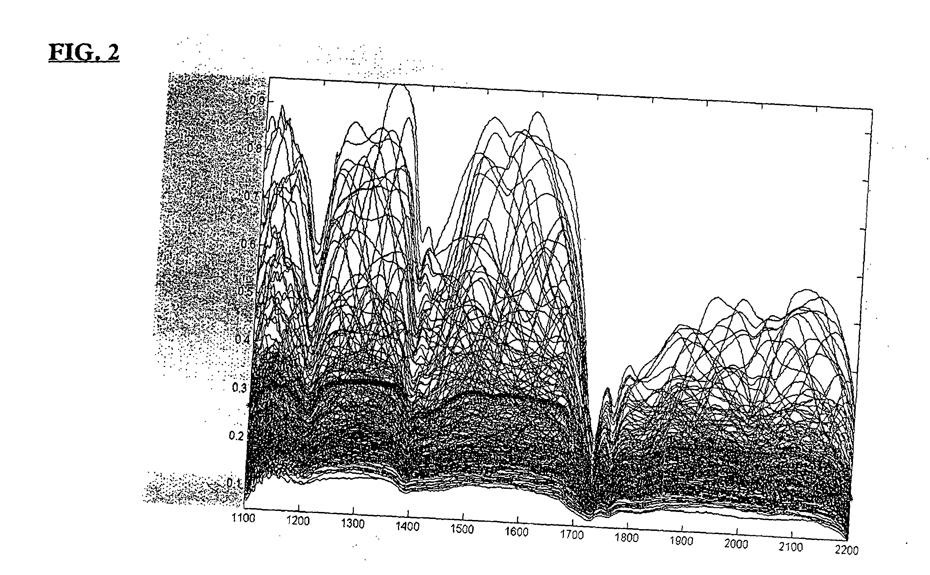

Figure 2 is an example of a set of "noisy" NIR spectra measured on-line in the flowing powder stream. It is representative of the raw spectral data produced by the spectrometer 1. A total of 246 single spectra are shown, the actual number being reduced for purposes of clarity. An "ideal" reference spectrum is marked as a bold black line on the graph. The y-axis shows reflectance and the x-axis shows wavelength in nanometres.

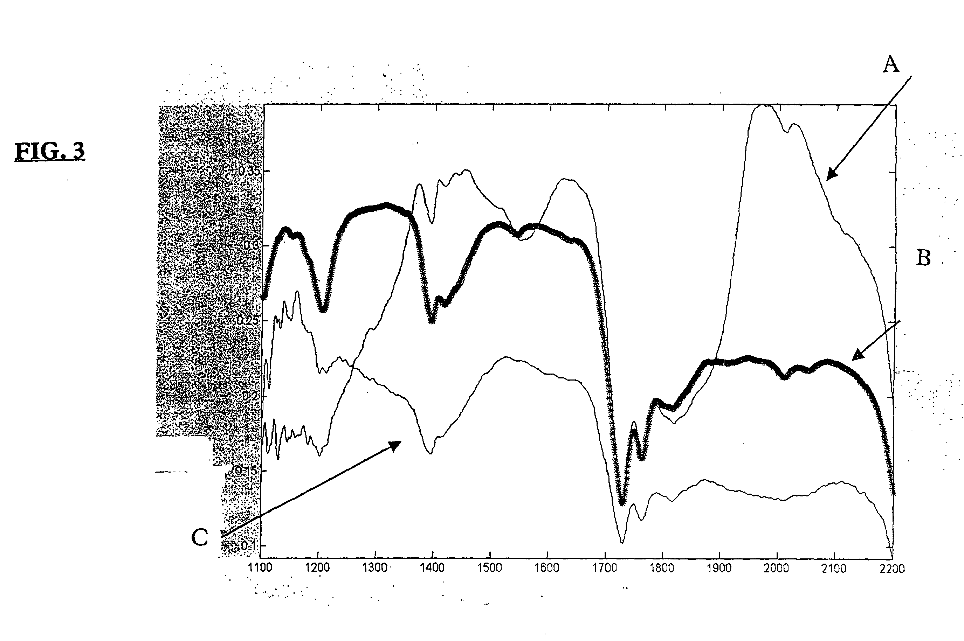

Figure 3 shows an accepted "good" spectrum C, a rejected "bad" spectrum A, and the reference spectrum B, which is shown as a bold black line. It can be seen that the "bad" spectrum bears no resemblance to the shape of the reference spectrum and will therefore be rejected. The "good" spectrum closely mimics the profile of the reference spectrum, although it is base line shifted. This spectrum will be accepted.

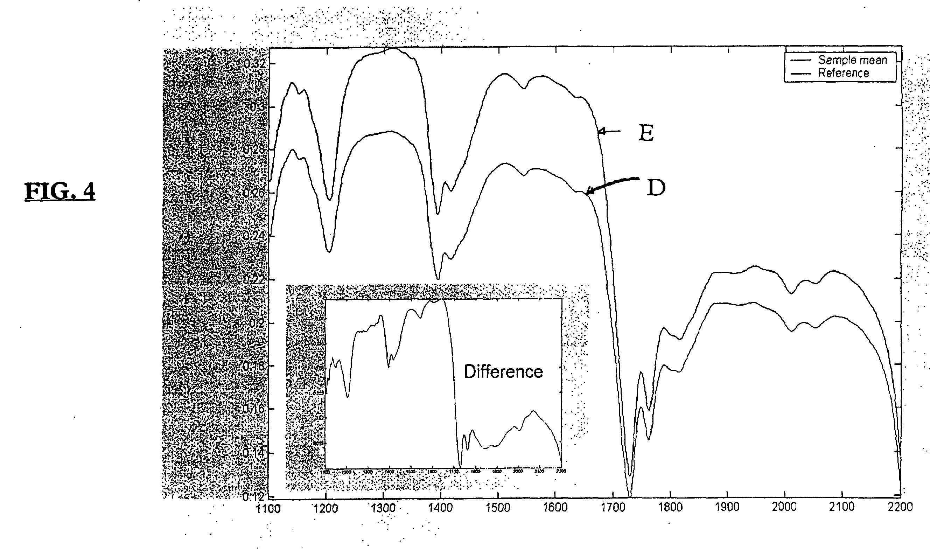

Figure 4 shows a comparison of the "ideal" (reference) spectrum E calculated from each of the single spectra shown in Figure 2 above against the actual data output D that is transmitted to prediction model 5. The data output spectrum D is the "mean" of all the spectra after selection of acceptable spectra has taken place. The difference between the overall mean spectrum D and the ideal spectrum E is shown in the small inlaid plot.

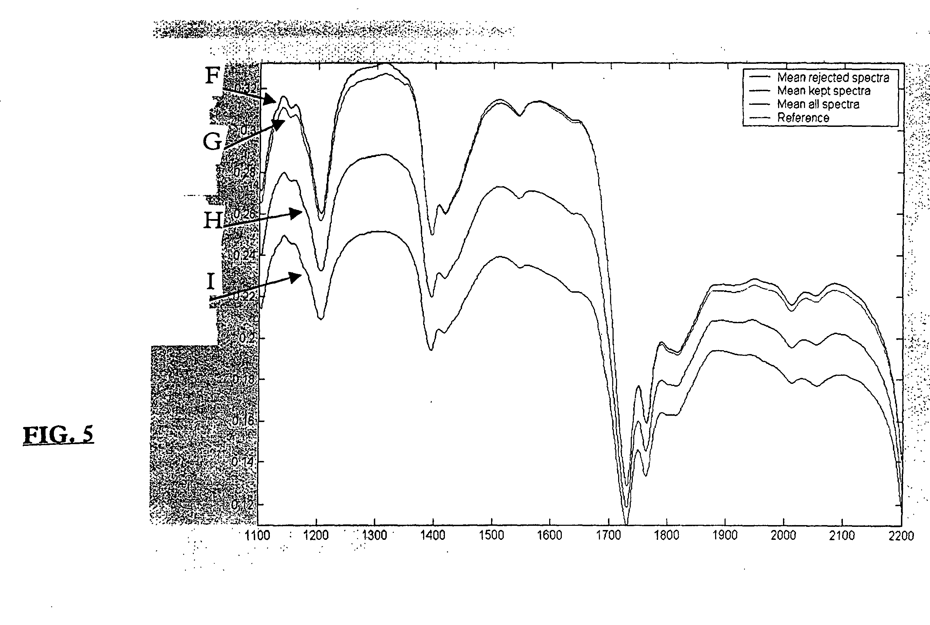

Figure 5 illustrates the output spectrum when the invention is put into effect, and compares it against various other spectra, including the mean of all spectra, i.e. the output spectrum that would be obtained if the processor did not carry out comparison steps to reject or accept the data. Line F shows the mean of all of the accepted spectra. Line G is the reference "ideal" spectrum. Line H is the mean output for all of the spectra and line I shows the mean of all rejected spectra.

It can be seen that line F (the mean of all spectra) is significantly shifted from the reference or "ideal" spectrum (graph G). This is because the rejected data from the rejected spectra (illustrated by line I) distorts the output signal. In fact, in this example 54% of all input spectra were rejected.

The sum of the differences between the different graphs in figure 5 was calculated as follows. The difference between the mean of the accepted spectra and the reference spectrum graphs was 2.7. This compared against the sum of a difference the mean of all spectra and the reference spectra being 30.7. However, the difference between the graph of rejected and the reference spectra was 58.0. Thus it can be seen that the graph of a mean of all accepted spectra is much closer to the reference or "ideal" spectrum.

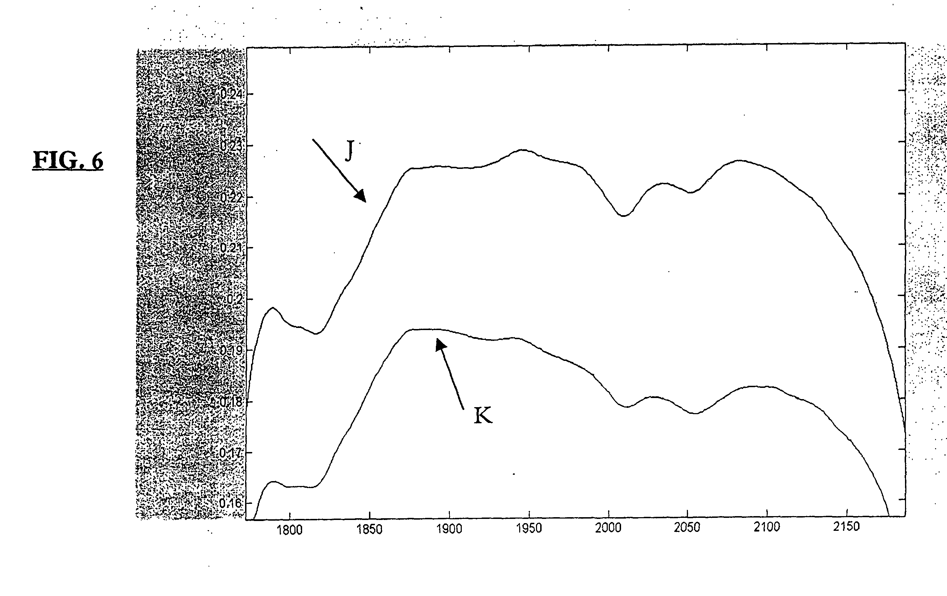

Figure 6 shows how the quality of the data according to the invention provides peaks that are better resolved after the method of the invention has been applied. Line J shows the mean of the accepted spectra and line K shows the means of the rejected spectra. The peaks are more clearly defined in line J corresponding to the mean of the accepted spectra whereas the peaks are more rounded and less well defined in line K because the rejected spectra mainly consist of noise and disturbance that distort the overall results.

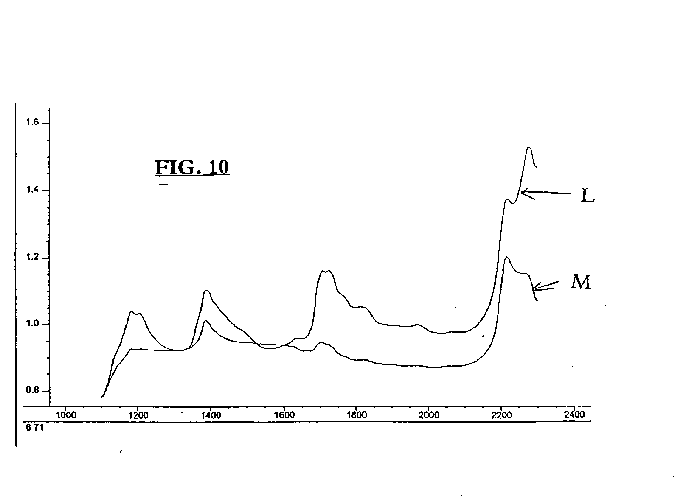

Figure 10 illustrates the difference between a spectrum output obtained according to the above-described method L and without its use M. The latter is a spectrum obtained using exactly the same process environment and the same grade of polymer, but without using the processor 4 to screen the data. Note that the polymer peaks around 1700 nm are present in line L, but the polymer peaks at 1700 nm in line M are practically non-existent.

In the first embodiment of the invention the algorithm shown in Figure 7 is used by processor 4. When setting up the system the operator inputs a value for N which determines the total number of spectra to be sampled before end output average spectrum is determined. N is normally from 100 to about 1000.

In this embodiment, an external trigger is used to start the process, such as a signal from the process control system that controls the production of the flowing polymer.

At the start of the process S1, n = 1. The sample scanning takes place S2 and once it is completed S3 a spectrum is generated S4 and it is analysed to compute the value of the quality measure S5 that is to be assessed. The computation takes place using a quality model S6 which may be very simple if the quality measure corresponds for example to the height of the maximum peak in the spectrum, or it may be more complex, if mathematical techniques are needed to compute a value, for example using PCA.

The quality limits S7 are predetermined at a certain value and the value computed for the data sample n = 1 is compared against the quality requirements S8. If the sample meets these requirements, the spectrum is accepted S9 and will be temporarily stored S10. If the spectrum is not accepted then it is rejected S11 and it is not stored.

A check S12 is then done to see if n = N and if not S13, the process of scanning and quality measurement is repeated for n = n + 1 (S14). Once a sufficient number of spectra have been obtained, and the value of n = N, a mean value S15 relating to the properties of the material under test is calculated and the mean or average spectrum is stored in the computer memory S16.

In a second embodiment of the invention shown in Figure 8, a different algorithm is used. This algorithm has certain similarities with that shown in Figure 6. Therefore only the differences between Figs. 6 and 7 will now be explained.

Whereas in Fig 7 the quality measures are computed S5, a quality comparison carried out S8 and a decision made whether to accept or reject each individual spectrum as soon as it is obtained S9, in Fig. 8, a subset of N spectra are scanned S18, S19 and stored S20 temporarily before carrying out computation of the quality measures S24 to see whether the spectra should be rejected or accepted. Thus, a number of spectra equal to the value of N are all tested against the quality limits S27 at the same time and the mean value S29 is calculated based on the remaining accepted spectra from each sampled subset of N spectra. As described in relation to Fig. 7, the mean spectra are then stored S30 in memory.

In a third embodiment of the invention, yet a further different type of algorithm, shown in Figure 9, is used. The algorithm of Fig. 9 differs from both Figures 7 and 8 as follows.

Firstly, the operator pre-sets a greater number of parameters before when the system is set up S31. Analagous to steps S18 to S22 of Fig. 8, a total number of spectra equal to M are sampled and placed into temporary storage S33 before any computation steps take place.

Each subset of spectra M (known as a cluster), is obtained by repeating steps S32, S33, S34 and S36 until the value of m = M, at which point the mean value for that particular cluster is calculated S38. When enough cluster mean values have been calculated i.e. when n.M=N (S39), the quality measures are computed S42 and comparison with the quality requirements takes place S44 in the same way as described above in relation to Figs. 7 and 8.

Thus, some of the cluster mean values are rejected S46 and others are accepted, the overall mean value S47 being calculated on the basis of the accepted cluster mean values. These accepted mean spectra are stored S48.

As explained above, in any of the embodiments of the invention, one of a number of quality models may be used to determine whether to accept or reject a spectrum. Examples of quality models that may be used are described below. All models will work with the algorithm of figure 9 but they may also work with the algorithms of figures 7 and Fig. 8 respectively as indicated below.

In relation to the algorithm of Fig 7 (i.e. the first embodiment), a simple quality model is to provide a ratio, either by comparing the height of two peaks or by comparing a peak with the baseline. These may then be compared with reference values for the ratio concerned. For example, the criterion used to compare and reject or accept spectra may be the ratio between the absorbance ratio at two different frequencies (Abs 1730 nm/Abs 1600 nm) .

An alternative method for use in conjunction with the first embodiment (figure 7) is to compare total energy reflected/transmitted with a predefined level. This is done by integrating the sample and reference spectra and comparing the results. It will be appreciated that a "bad" spectrum will correspond to low energy absorption.

Another approach, which is suitable for the algorithm of figures 7 or 8 is to use Principle Component Analysis (PCA) to generate scores for each sample spectrum. One version of this approach is to generate the scores from a previously generated model (e.g. from "off-line" data) and this may be used in the algorithm of figure 7. Another version is to generate scores from a model made from previously collected data, e.g. temporarily stored, recently acquired data. This may be used in the algorithm of figure 8. The threshold limit for either version may be either a maximum allowed value for one or more scores, or a distance from the model center (Euclidian or Mahalanobis - the Mahalanobis distance is essentially a Euclidian distance adjusted for inter-correlations among the variables), or maximum Hotelling, etc.

In still further alternative methods, the spectra may be treated directly as multidimensional vectors (with each frequency corresponding to one dimension). The sample and reference spectra may then be projected onto each other and the Euclidian distance between them measured. Spectra that are far away from reference are rejected. A variation on this approach is to calculate the Mahalanobis distance instead of the Euclidian distance.

Finally, it is possible to check many or all peak heights and determine whether more than a certain number lie further than allowed from the corresponding reference values. In other words, the difference between the sample absorption and the "ideal" absorption for each frequency is calculated. To do this a set of allowable variations from the ideal may be generated. Alternatively it may be determined whether the sum of the differences exceeds a given threshold value.

## Claims

1. A method of analysing data related to the properties of a flowing particulate polymer comprising:
(i) obtaining a plurality of data samples;
(ii) testing each data to determine whether to accept or reject said data sample;
(iii) analysing accepted data samples obtained in step (ii) to obtain a data output related to the properties of said polymer itself.

2. A method as claimed in claim 1 wherein said data is spectroscopic data.

3. A method as claimed in claim 1 or claim 2 wherein said data is obtained by NIR spectroscopy.

4. A method as claimed in any one of claims 1 to 3 wherein the output obtained from analysing each accepted data sample is obtained in real time.

5. A method as claimed in any one of claims 1 to 4 wherein each data sample is a mean or average value of a subset of data samples.

6. A method as claimed in any one of claims 1 to 5 wherein steps (i) and (ii) are carried out simultaneously whereby each data sample obtained is subjected to testing step (ii) and the process repeated until a predetermined number of accepted data samples are obtained for analysis.

7. A method as claimed in any one of steps 1 to 6 wherein in step (i) a predetermined number of data samples are obtained and optionally stored before testing each data sample according to step (ii).

8. A method as claimed in any preceding claim, wherein said polymer is polypropylene or polyethylene.

9. A method as claimed in any preceding claim wherein said analysing step (iii) comprises determining the properties of a solid polymer entrained in a fluid flowing in a pipe.

10. A method as claimed in claim 9 wherein said polymer is in the form of powder or pellets.

11. A method as claimed in any preceding claim wherein the properties of the polymer are determined by calculating a mean value of the accepted data samples the mean value is used to determine the properties of the polymer.

12. A method as claimed in any preceding claim wherein the data analysis thereby obtained is used to control a process for producing the said polymer.

13. A method as claimed in any preceding claim wherein the data analysis thereby obtained is used to determine the properties of a batch of product produced by a continuous process.

14. A method as claimed in any preceding claim wherein said testing step (ii) comprises comparing each data sample against a reference data sample.

15. A method as claimed in claim 14 comprising using criteria selected from any one or any combination of the following: minimum/maximum energy reading of a spectrum, minimum/maximum peak ratio or peak difference at a given energy level of a spectrum, PCA (principle component analysis) of scores based on a previously acquired data, and a range of standard deviations of individual wavelengths of a spectrum.

16. Apparatus for providing information about the properties of flowing particulate polymer, the apparatus comprising an online measurement instrument, means for testing each data sample obtained in order to determine whether to accept or reject said data sample and means for analysing said accepted sample(s) to obtain a data output related to the properties of said polymer itself.

17. An apparatus as claimed in claim 16 wherein said instrument is a spectrophotometer.

18. An apparatus as claimed in claim 16 or 17 further comprising a display means capable of displaying the output in real time.

19. An apparatus as claimed in any one of claims 16 to 18 wherein the means for analysing the data comprises an algorithm built into a data acquisition system.

20. An apparatus as claimed in any one of claims 16 to 19 wherein said means of analysing the data comprises a computer.

## Patentansprüche

1. Verfahren, zum Analysieren von Daten, die Eigenschaften eines fließenden, partikelftirmigen Polymers betreffen, das folgendes aufweist:
(i) Gewinnen einer Vielzahl von Datenstichproben;
(ii) Testen aller Daten um festzustellen, ob diese Datenstichprobe akzeptiert oder zurückgewiesen wird;
(iii) Analysieren der im Schritt (ii) erhaltenen akzeptierten Datenstichproben, so daß ein Datenansgangssignal erhalten wird, das die Eigenschaften des Polymers selbst betrifft.

2. Verfahren nach Anspruch 1, wobei die Daten Spektroskopiedaten sind.

3. Verfahren nach Anspruch 1 oder 2, wobei die Daten durch NIR-Spektroskopie erhalten werden.

4. Verfahren nach einem der Ansprüche 1 bis 3, wobei das durch die Analyse jeder akzeptierten Datenstichprobe erhaltene Ausgangsignal in Echtzeit erhalten wird.

5. Verfahren nach einem der Ansprüche 1 bis 4, wobei jede Datenstichprobe ein Mittelwert oder Durchschnittswert eines Teilsatzes von Datenstichproben ist.

6. Verfahren nach einem der Ansprüche 1 bis 5, wobei die Schritte (i) und (ii) gleichzeitig durchgeführt werden, wobei jede erhaltene Datenstichprobe dem Testschritt (ii) unterzogen wird und das Verfahren wiederholt wird, bis eine vorbestimmte Anzahl von akzeptierten Datenstichproben für die Analyse erhalten wird.

7. Verfahren nach einem der Ansprüche 1 bis 6, wobei im Schritt (i) eine vorbestimmte Anzahl von Datenstichproben erhalten wird und gegebenenfalls gespeichert wird, bevor jede Datenstichprobe gemäß dem Schritt (ii) getestet wird.

8. Verfahren nach einem der vorstehenden Ansprüche, wobei das Polymer Polypropylen oder Polyethylen ist.

9. Verfahren nach einem der vorstehenden Ansprüche, wobei der Analyseschritt (iii) die Bestimmung der Eigenschaften eines festen Polymers umfaßt, das in einem Fluid mitgerissen wird, das in einem Rohr strömt.

10. Verfahren nach Anspruch 9, wobei das Polymer in Form von Pulver oder Granulat vorliegt.

11. Verfahren nach einem der vorstehenden Ansprüche, wobei die Eigenschaften des Polymers bestimmt werden, indem ein Mittelwert der akzeptierten Datenstichproben bestimmt wird, wobei dieser Mittelwert dazu dient, die Eigenschaften des Polymers zu bestimmen.

12. Verfahren nach einem der vorstehenden Ansprüche, wobei die **dadurch** erhaltene Datenanalyse dazu dient, ein Verfahren zur Herstellung dieses Polymers zu steuern.

13. Verfahren nach einem der vorstehenden Ansprüche, wobei die **dadurch** erhaltene Datenanalyse dazu dient, die Eigenschaften einer Produktcharge zu bestimmen, die durch ein kontinuierliches Verfahren erzeugt worden ist.

14. Verfahren nach einem der vorstehenden Ansprüche, wobei der Testschritt (ii) den Vergleich aller Datenstichproben mit einer Bezugsdatenstichprobe umfaßt.

15. Verfahren nach Anspruch 14, das die Anwendung von Kriterien umfaßt, die aus irgendeinem oder irgendeiner Kombination der folgenden ausgewählt sind: Minimum/Maximum des Energiewerts eines Spektrums, Minimum/Maximum des Peakverhältnisses oder der Peakdifferenz bei einem vorgegebenen Energiewert eines Spektrums, PCA (Analyse der grundsätzlichen Komponenten) von Punkten, die auf bereits erfaßten Daten basieren, und ein Bereich der Standardabweichungen der einzelnen Wellenlängen eines Spektrums.

16. Vorrichtung, um eine Information über die Eigenschaften eines fließenden, partikelförmigen Polymers bereitzustellen, wobei die Vorrichtung ein Gerät für die direkte Messung, eine Einrichtung zum Testen jeder erhaltenen Datenstichprobe, um festzustellen, ob diese Datenstichprobe akzeptiert oder zurückgewiesen wird, und eine Einrichtung zum Analysieren dieser akzeptierten Stichprobe(n) umfaßt, so daß ein Datenausgangssignal erhalten wird, das die Eigenschaften dieses Polymers selbst betrifft.

17. Vorrichtung nach Anspruch 16, wobei das Gerät ein Spektrophotometer ist.

18. Vorrichtung nach Anspruch 16 oder 17, die ferner eine Anzeigeeinrichtung umfaßt, die das Ausgangssignal in Echtzeit anzeigen kann.

19. Vorrichtung nach einem der Ansprüche 16 bis 18, wobei die Einrichtung zum Analysieren der Daten einen Algorithmus umfaßt, der in ein Datenerfassungssystem eingebaut ist.

20. Vorrichtung nach einem der Ansprüche 16 bis 19, wobei die Einrichtung zum Analysieren der Daten einen Computer umfaßt.

## Revendications

1. Procédé d'analyse de données relatives aux propriétés polymère particulaire en écoulement comprenant les étapes de :
(i) obtenir une pluralité d'échantillons de données ;
(ii) tester chaque donnée pour déterminer si ledit échantillon de données doit être accepté ou rejeté ;
(iii) analyser les échantillons de données acceptés obtenus à l'étape (ii) pour obtenir une sortie de données relatives aux propriétés dudit polymère lui-même.

2. Procédé tel que revendiqué dans la revendication 1, dans lequel lesdites données sont des données de spectroscopie.

3. Procédé tel que revendiqué dans 1a revendication 1 ou dans la revendication 2, dans lequel lesdites données sont obtenues par spectroscopie NIR.

4. Procédé tel que revendiqué dans l'une quelconque des revendications 1 à 3, dans lequel les données de sortie obtenues en analysant chaque échantillon de données accepté sont obtenues en temps réel.

5. Procédé tel que revendiqué dans l'une quelconque des revendications 1 à 4, dans lequel chaque échantillon de données est une valeur moyenne d'un sous-ensemble d'échantillons de données.

6. Procédé tel que revendiqué dans l'une quelconque des revendications 1 à 5, dans lequel les étapes (i) et (ii) sont effectuées simultanément, lors desquelles chaque échantillon de données obtenu est soumis à l'étape de test (ii) et ce processus est répété jusqu'à ce qu'un nombre prédéterminé d'échantillons de données acceptés soit obtenu en vue de l'analyse.

7. Procédé tel que revendiqué dans l'une quelconque des revendications 1 à 6, dans lequel lors de l'étape (i) un nombre prédéterminé d'échantillons de données est obtenu et éventuellement stocké avant de tester chaque échantillon de données suivant l'étape (ii).

8. Procédé tel que revendiqué dans l'une quelconque des revendications précédentes, dans lequel ledit polymère est du polypropylène ou du polyéthylène.

9. Procédé tel que revendiqué dans l'une quelconque des revendications précédentes, dans lequel ladite étape d'analyse (iii) comprend la détermination des propriétés d'un polymère solide entraîné dans un fluide s'écoulant dans une conduite.

10. Procédé tel que revendiqué dans la revendication 9, dans lequel ledit polymère se présente sous forme de poudre ou de granulats.

11. Procédé tel que revendiqué dans l'une quelconque des revendications précédentes, dans lequel les propriétés du polymère sont déterminées en calculant une valeur moyenne des échantillons de données acceptés, la valeur moyenne servant à déterminer les propriétés du polymère.

12. Procédé tel que revendiqué dans l'une quelconque des revendications précédentes, dans lequel l'analyse des données ainsi obtenue est utilisée pour réguler un procédé de production dudit polymère.

13. Procédé tel que revendiqué dans l'une quelconque des revendications précédentes, dans lequel l'analyse des données ainsi obtenue est utilisée pour déterminer les propriétés d'un lot de produit fabriqué par procédé continu.

14. Procédé tel que revendiqué dans l'une quelconque des revendications précédentes, dans lequel ladite étape de test (ii) comprend la comparaison de chaque échantillon de données à un échantillon de données de référence.

15. Procédé tel que revendiqué dans la revendication 14, comprenant l'utilisation de critères choisis parmi l'un quelconque ou une quelconque combinaison des critères suivants : niveau énergétique minimal/maximal d'un spectre, rapport de pic ou différence de pic minimal(e)/maximal(e) à un niveau énergétique donné d'un spectre, ACP (analyse en composantes principales) des résultats sur la base de données saisies au préalable, et une fourchette d'écarts-types des longueurs d'ondes individuelles d'un spectre.

16. Appareil destiné à fournir des informations sur les propriétés d'un polymère particulaire à écoulement, ledit appareil comprenant un instrument de mesure en continu, des moyens pour tester chaque échantillon de données obtenu, afin de déterminer si ledit échantillon de données doit être accepté ou rejeté, et des moyens d'analyse dudit/desdit(s) échantillon(s) accepté(s) pour obtenir une sortie de données relatives aux propriétés dudit polymère lui-même.

17. Appareil tel que revendiqué dans la revendication 16, dans lequel ledit instrument est un spectrophotomètre.

18. Appareil tel que revendiqué dans la revendication 16 ou 17, comprenant en outre un moyen d'affichage capable d'afficher les données de sortie en temps réel.

19. Appareil tel que revendiqué dans l'une quelconque des revendications 16 à 18, dans lequel le moyen d'analyse des données comprend un algorithme intégré à un système de saisie des données.

20. Appareil tel que revendiqué dans l'une quelconque des revendications 16 à 19, dans lequel ledit moyen d'analyse des données comprend un ordinateur.
